# EUROPEAN PATENT SPECIFICATION

(11) **EP 2 601 357 B1**
(45) Date of publication and mention of the grant of the patent: **20.05.2015**
(21) Application number: 11748564.9
(22) Date of filing: 19.07.2011
(51) Int. Cl.: E03C 1/04

(54) **A SEQUENTIAL MIXER FAUCET ALSO HAVING THE FUNCTION OF A DIVERTER**
SEQUENZIELLE MISCHBATTERIE MIT ZUSÄTZLICHER UMLENKFUNKTION
ROBINET MÉLANGEUR SÉQUENTIEL REMPLISSANT ÉGALEMENT LA FONCTION D'INVERSEUR

(30) Priority: 02.08.2010 IT TO20100665
(43) Date of publication of application: 12.06.2013
(73) Proprietor: Studio Tecnico Sviluppo E Ricerche S.T.S.R. S.r.l., I-24049 Verdellino Zingonia (IT)
(72) Inventor: KNAPP, Francesco, I-27061 Cava Manara (IT)
(74) Representative: Patrito, Pier Franco
(86) International application number: PCT/EP2011/003598
(87) International publication number: WO 2012/016638

(56) References cited:
- EP-A1- 0 309 443
- EP-A2- 0 844 423
- WO-A2-2009/091135
- GB-A- 2 123 530
- US-A1- 2006 162 793

## Description

The subject of this invention is a sequential mixer faucet for sanitary appliances, which also has the function of a diverter.

The sequential mixer faucets are designed for controlling, by a single maneuver, both the delivered flow rate and the mixing ratio between cold water and hot water. In general, a sequential faucet, in the course of a displacement of a maneuver member thereof starting from an interception position, at first delivers cold water under a flow rate which increases up to a preestablished value, then, by keeping unchanged the delivered flow rate, operates a mixing operation by introducing hot water in an increasing ratio with respect to the cold water, until it delivers hot water only. Such sequential mixer faucets are mainly used in order to render more easy the maneuver by disabled persons which have a difficulty in maneuvering a usual single control mixing faucet.

However, often a sanitary appliance includes two delivery devices, for example a basin spout and a shower head. In these cases the delivery from both delivery devices may be controlled by a single mixer faucet, but this requires the additional use of a diverter for directing the delivered flow rate to the one or to the other delivery device. The need to control two separate maneuver members can result in a trouble, particularly for disabled persons.

In view of these circumstances, the object of the present invention is to provide a sequential mixer faucet capable of allowing, through two different maneuver manners of a single maneuver member, to operate both the sequential delivery control and the diversion of the delivered flow rate between two different delivery devices.

The stated object has already been attained, in part, by the faucet according to the document WO 2009/091135. However this faucet includes only two sealingly superimposed plates of hard material, and this limits the operation thereof. The invention aims to overcome such operational limits.

This object is attained, according to the present invention, in that the sequential mixer faucet comprises a case and in said case: - three sealingly superimposed plates of hard material, a first fixed plate, a second plate movable in rotation, called mixing plate, and a third radially displaceable plate, called switch plate; - said first fixed plate having two supply openings intended to be connected, respectively, to a cold water piping and to a hot water piping, and two delivery openings intended to be connected, respectively, to two delivery devices, said second mixing plate having a control opening intended to cooperate with the two supply openings of the first fixed plate, and having two passage openings intended to cooperate with the two delivery openings of the first fixed plate; - said third switch plate being free of openings and being intended to close, alternatively, the one or the other of said two passage openings of the second mixing plate; - a transmission member displaceable in rotation, solid with said second mixing plate; - a slider guided for radial displacement within said transmission member and solid with said third switch plate; and a maneuver lever displaceable both in rotation and in oscillation, said maneuver lever being connected to said slider for radially displacing said slider and said third switch plate, as a consequence of an oscillation of the maneuver lever, and said maneuver lever being connected to said transmission member for displacing in rotation said transmission member and said second mixing plate, as a consequence of a rotation of the maneuver lever.

Thanks to these features, when the maneuver lever is made to oscillate it controls the displacement of said third switch plate which, by closing the one or the other of said passage openings of the second mixing plate, allows the mixing faucet to control the one or the other of said two delivery devices. When, on the contrary, said maneuver lever is made to rotate, it controls the rotation of said second mixing plate which, by cooperating with the supply openings of said first fixed plate, operates a sequential control of the delivery.

Preferably, the whole of said component parts is kept within said case by a bottom member applied to said case, this bottom member having two supply connections communicating with said supply openings of said first fixed plate, and having two delivery connections communicating with said delivery openings of said first fixed plate.

Preferably, said first fixed plate has said supply openings shaped as subsequent circle segments which occupy in their whole about a third of a circle, and has a first central delivery opening substantially shaped as a circle and a second delivery opening shaped as a circle segment extending on about a third of a circle.

Preferably, said second mixing plate has said passage openings in a substantially circular shape, the one central and the other displaced towards the periphery, and it has said control opening shaped as a circle segment tapering towards an end portion, said three openings being substantially aligned along a diameter of the second mixing plate.

These and other features, objects and advantages of the subject of the present invention will appear more clearly from the following description of an embodiment, being a non limiting example, with reference to the appended drawings, wherein:
Figure 1 shows the section of a sequential mixer faucet according to this invention.
Figure 2 shows a plan view of the third switch plate.
Figure 3 shows a plan view of the second mixing plate.
Figure 4 shows a plan view of the first fixed plate.
Figure 5 shows the three superimposed faucet plates, in a condition of delivery directed towards a first delivery device but intercepted.
Figure 6 shows the three superimposed faucet plates, in a condition of mixed delivery directed towards the first delivery device.
Figure 7 shows the three superimposed faucet plates, in a condition of delivery directed towards a second delivery device but intercepted.
Figure 8 shows the three superimposed faucet plates, in a condition of mixed delivery directed towards the second delivery.

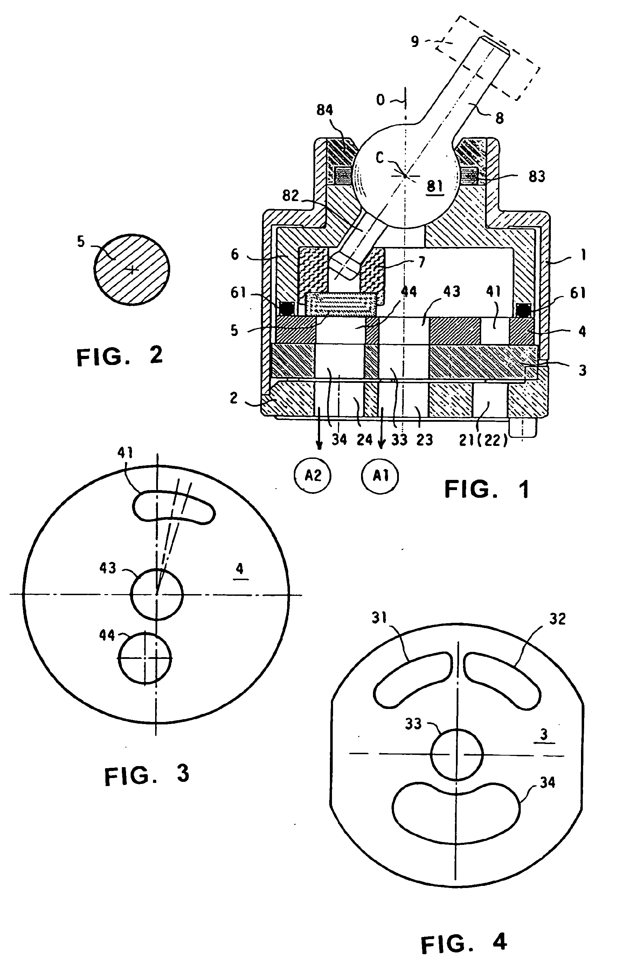

With reference to Figure 1, the described sequential mixer faucet comprises a case 1 closed by a bottom member 2 which enclosed in the case 1 all the component parts of the faucet. Onto the bottom member 2 are superimposed, in this order, a first fixed plate 3, a second mixing plate 4 and a third switch plate 5. The bottom member 2 has a supply connection 21 for cold water and another supply connection (22) for hot water, a delivery connection 23 for supplying a first delivery device A1 (such as for example a basin spout) and a delivery connection 24 for supplying a second delivery device A2 (such as for example a shower head).

In the first fixed plate 3 (Figure 4) are formed: a first supply opening 31 for cold water, which corresponds to the connection 21 for cold water of the bottom member 2, a second supply opening 32 for hot water, which corresponds to the connection for hot water of the bottom member 2, a first delivery passage 33 which corresponds to the delivery connection 23 of the bottom member 2, and a second delivery passage 34 which corresponds to the delivery connection 24 of the bottom member 2.

In the second mixing plate 4 (Figure 3) are formed: a control opening 41 intended to cooperate with the supply openings 31, 32 of the first fixed plate 3, a passage opening 43 intended to cooperate with the delivery opening 33 of the first fixed plate 3, and a passage opening 44 which corresponds to the delivery opening 34 of the first fixed plate 3.

The third switch plate 5 (Figure 2) is free from openings, it may be simply circular (as it has been represented) and it is intended to close, alternatively, the passage opening 43 or the passage opening 44 of the second mixing plate 4.

As shown by Figure 1, to the second mixing plate 4 is fixed, in a watertight manner due to packings 61, a transmission member 6, which may be rotated as it will be explained later on, in order to rotate the second mixing plate 4. Within the transmission member 6 is guided for a radial displacement a slider 7 which is solid with the third switch plate 5.

A maneuver lever 8 is pivoted in C to the transmission member 6, in such a way that it can oscillate but it cannot rotate with respect to the transmission member. The watertight connection is ensured by a packing 83, retained by a ring 84. An inner arm 82 of the maneuver lever 8 is coupled with the slider 7. Therefore, lever 8 can transmit to the transmission member 6 a rotation, when lever 8 is made to rotate around the axis 0 of the faucet, whereas lever 8 causes a radial displacement of the slider 7 when it is made to oscillate around the center C of the pivoting member 81. To the outer arm of lever 8 is applied a handle 9 for maneuvering the lever 8; the handle 9 may have any shape, for example it may be a knob or a lever.

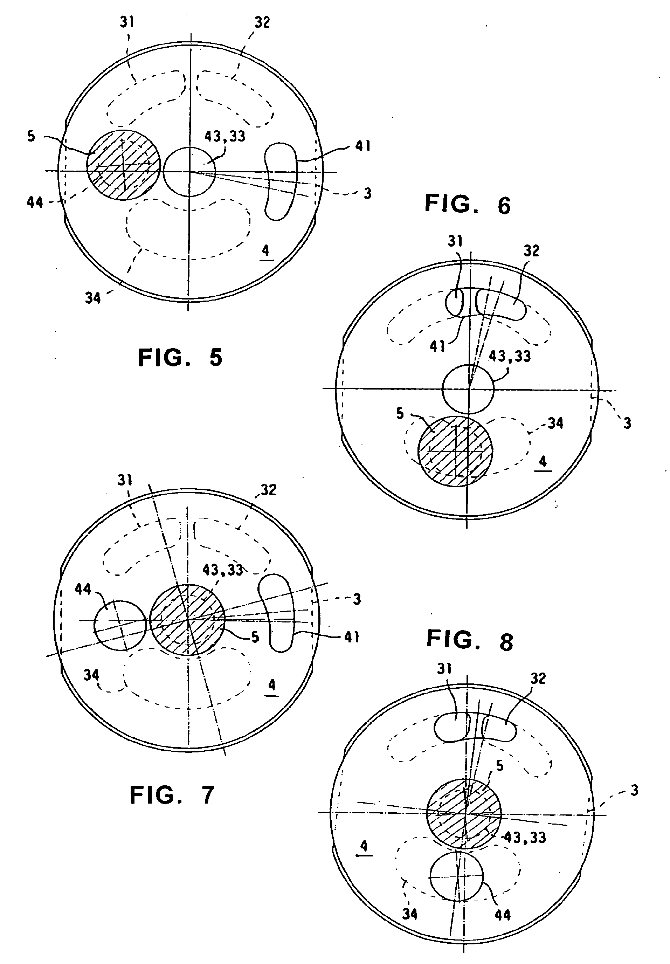

The operation of the described device is as follows. In the position represented in Figure 1, to which corresponds Figure 5, the third plate 5 closes the delivery opening 44 of the second plate 4, and therefore it hinders the supply to the second delivery device A2, whereas the delivery opening 43, to which correspond the delivery passage 33 and the delivery connection 23, is open and allows the supply of the first delivery device A1. However, in this position, the control opening 41 of the second mixing plate does non correspond to any supply opening, whereby no delivery takes place.

By impressing a rotation around the axis 0 to the maneuver lever 8, and therewith to the transmission member 6 and to the second mixing plate 4, nothing changes with respect to the permission to supply the first delivery device A1 and to prohibition to supply the second delivery device A2, whereas the control opening 41 of the second mixing plate 4 comes to correspond to the one, the other, or both the supply openings 31, 32. According to the extent of the rotation impressed to the maneuver lever 8, all the normal delivery operations of a sequential mixer faucet are obtained.

On the contrary, starting from the position of Figures 1 and 5, by impressing to the maneuver lever 8 an oscillation around the center C, are radially displaced the slider 7 and the third switch plate 5, and this latter comes to close the delivery opening 43 of the second plate 4, and therefore hinders the supply of the first delivery device A1, whereas the delivery opening 44, to which correspond the delivery passage 34 and the delivery connection 24, is free and allows the supply of the second delivery device A2. However, in this position, the control opening 41 of the second mixing plate does non correspond to any supply opening, whereby no delivery takes place.

Also in this case, by impressing a rotation around the axis 0 to the maneuver lever 8, and therewith to the transmission member 6 and to the second mixing plate 4, nothing changes with respect to the permission to supply the second delivery device A2 and to prohibition to supply the first delivery device A1, whereas the control opening 41 of the second mixing plate 4 comes to correspond to the one, the other, or both the supply openings 31, 32. According to the extent of the rotation impressed to the maneuver lever 8, all the normal delivery operations of a sequential mixer faucet are obtained.

The two functions of control and of diversion of the sequential mixer faucet according to the invention are therefore mutually independent: by oscillating the maneuver lever 8 around center C the delivery is diverted towards the first delivery device A! or towards the second delivery device A2, without in any way modifying the delivery control, whereas by rotating the maneuver lever 8 around the axis 0 the control of the delivery is effected as with a usual sequential mixer faucet. The maneuver of this sole apparatus, serving both as a sequential mixer faucet and as a delivery diverter, is therefore of the maximum easy, even for disabled persons.

The arrangement, shape and proportions of the various openings of the plates may be modified in order to obtain the preferred course of the control, in a way per se known in the technique.

It is to be understood that the invention is not limited to the embodiment described and represented as an example. Several possible modifications have been stated in the course of the description, and others are within the capacity of the skilled persons. These modifications and any replacement with technically equivalent means can be made to what has been described and represented without departing from the scope of this patent, as it is defined by the appended Claims.

## Claims

1. A sequential mixer faucet which comprises a case (1) and in said case: - a first fixed plate (3), a second plate (4) movable in rotation, called mixing plate, and a third radially displaceable plate (5), called switch plate; said three plates being sealingly superimposed plates of hard material; - said first fixed plate (3) having two supply openings (31,32) intended to be connected, respectively, to a cold water piping and to a hot water piping, and having two delivery openings (33,34) intended to be connected, respectively, to two delivery devices; - said second mixing plate (4) having a control opening (41) intended to cooperate with the two supply openings (31,32) of the first fixed plate (3), and having two passage openings (43,44) intended to cooperate with the two delivery openings (33,34) of the first fixed plate (3); - said third switch plate (5) being free from openings and being intended to close, alternatively, the one or the other of said two passage openings (43,44) of the second mixing plate (4); - a transmission member (6) displaceable in rotation, solid with said second mixing plate (4); - a slider (7) guided for radial displacement within said transmission member (6) and solid with said third switch plate (5); - and a maneuver lever (8) displaceable both in rotation and in oscillation, said maneuver lever (8) being connected to said slider (7) for radially displacing said slider (7) and said third switch plate (5), as a consequence of an oscillation of the maneuver lever (8), and said maneuver lever (8) being connected to said transmission member (6) for displacing in rotation said transmission member (6) and said second mixing plate (4), as a consequence of a rotation of the maneuver lever (8).

2. A sequential mixer faucet as set forth in Claim 1, **characterized in that** the whole of said component parts (3-8) is kept within said case (1) by a bottom member (2) applied to said case (1), this bottom member (2) having two supply connections (21,22) communicating with said supply openings (31,32) of said first fixed plate (3) and intended to be connected, respectively, to a cold water piping and to a hot water piping, and this bottom member (2) having two delivery connections (23,24) communicating with said delivery openings (33,34) of said first fixed plate (3), and intended to be connected, respectively, to a first delivery device (A1) and to a second delivery device (A2).

3. A sequential mixer faucet as set forth in Claim 1, **characterized in that** said first fixed plate (3) has said supply openings (31,32) shaped as subsequent circle segments which occupy in their whole about a third of a circle, and has a first central delivery opening (33) substantially shaped as a circle and a second delivery opening (34) shaped as a circle segment extending on about a third of a circle.

4. A sequential mixer faucet as set forth in Claim 1, **characterized in that** said second mixing plate (4) has said passage openings (43,44) in a substantially circular shape, the one (43) central and the other (44) displaced towards the periphery, and it has said control opening (41) shaped as a circle segment tapering towards an end portion, said three openings (41,43,44) being substantially aligned along a diameter of the second mixing plate (4).

## Patentansprüche

1. Eine stufenlose Mischbatterie, die ein Gehäuse (1) umfasst und in diesem Gehäuse Folgendes: - eine erste feste Platte (3), eine zweite bewegliche, Mischplatte genannte, drehbare Platte (4) und eine dritte, Ableitplatte genannte, radial verschiebbare Platte (5), wobei die genannten drei Platten hermetisch übereinander liegende Platten aus hartem Werkstoff sind; - wobei die genannte erste feste Platte (3) zwei Versorgungsöffnungen (31, 32) aufweist, die dazu bestimmt sind, jeweils an eine Kaltwasserleitung und eine Warmwasserleitung angeschlossen zu werden und über zwei Auslassöffnungen (33, 34) verfügen, die dazu bestimmt sind, jeweils an zwei Ausgabeapparaturen angeschlossen zu werden; - wobei die genannte zweite Tischplatte (4) eine Regelungsöffnung (41) aufweist, die dazu bestimmt ist, mit den beiden Versorgungsöffnungen (31, 32) der ersten festen Platte (3) zu kooperieren, und zwei Durchgangsöffnungen (43, 44), die dazu bestimmt sind, mit den beiden Ausgabeöffnungen (33, 34) der ersten festen Platte (3) zu kooperieren; - wobei die genannte dritte Ableitplatte (5) frei von Öffnungen und dazu bestimmt ist, abwechselnd die eine oder die andere der genannten Durchgangsöffnungen (43, 44) der zweiten Mischplatte (4) zu verschließen; - ein drehbar verschiebbares, mit der genannten zweiten Mischplatte (4) verbundenes Übertragungsorgan (6); - ein für eine radiale Verschiebung in dem genannten Übertragungsorgan (6) geführtes und mit der genannten dritten Ableitplatte (6) verbundenes Gleitstück (7); - und einen Manövrierhebel (8), der sowohl drehend als auch schwingend verschiebbar ist, wobei der genannte Manövrierhebel (8) mit dem genannten Gleitstück (7) verbunden ist, um das genannte Gleitstück (7) und die genannte dritte Ableitplatte (5) als Folge einer Schwingung des Manövrierhebels (8) radial zu verschieben und wobei der genannte Manövrierhebel (8) mit dem genannten Übertragungsorgan (6) verbunden ist, um das genannte Übertragungsorgan (6) und die genannte zweite Mischplatte (4) als Folge einer Drehung des Manövrierhebels (8) drehend zu verschieben.

2. Eine stufenlose Mischbatterie nach Anspruch 1, **dadurch gekennzeichnet, dass** die Gesamtheit der genannten Bestandteile (3-8) in dem genannten Gehäuse (1) von einem an dem genannten Gehäuse (1) befestigten Boden (2) gehalten wird, wobei dieser Boden (2) mit zwei Versorgungsanschlüssen (21, 22) ausgestattet ist, die mit den genannten Versorgungsöffnungen (31, 32) der genannten ersten festen Platte (3) verbunden und dazu bestimmt sind, jeweils an eine Kaltwasserleitung und eine Warmwasserleitung angeschlossen zu werden, und dieser Boden (2) mit zwei Ausgabeanschlüssen (23, 24) ausgestattet ist, die mit den genannten Ausgabeöffnungen (33, 34) der genannten erste festen Platte (3) verbunden und dazu bestimmt sind, jeweils an eine erste Ausgabeapparatur (A1) und an eine zweite Ausgabeapparatur (A2) angeschlossen zu werden 3.

3. Eine stufenlose Mischbatterie nach Anspruch 1, **dadurch gekennzeichnet, dass** die genannten Versorgungsöffnungen (31, 32) der ersten festen Platte (3) als kreisförmige, aufeinander folgende Segmente ausgebildet sind, die in ihrer Gesamtheit ungefähr ein Drittel der Drehung einnehmen und diese eine erste zentrale Ausgabeöffnung (33) im Wesentlichen kreisförmiger Form und eine zweite Ausgabeöffnung (34) aufweist, die wie ein kreisförmiges, auf ca. einem Drittel der Drehung verlaufendes Segment ausgebildet ist.

4. Eine stufenlose Mischbatterie nach Anspruch 1, **dadurch gekennzeichnet, dass** bei der genannten zweiten Mischplatte (4) die genannten Durchgangsöffnungen (43, 44) im Wesentlichen kreisförmig sind und die eine (43) zentral und die andere (44) zum Rand versetzt liegt und ihre Regelungsöffnung (41) in Form eines kreisförmigen, zu einem Ende hin verjüngten Segments ausgebildet ist, wobei die drei Öffnungen (41, 43, 44) im Wesentlichen entlang eines Durchmessers der zweiten Mischplatte (4) ausgerichtet sind.

## Revendications

1. Un robinet mélangeur progressif comprenant une enveloppe (1) et dans ladite enveloppe: - une première plate fixe (3), une seconde plate (4) movable en rotation, appelée plate de mélange, et une troisième plate (5) déplaçable en direction radiale, appelée plate de déviation, lesdites trois plates étant des plates en matériau dur superposées en étanchéité; - ladite première plate fixe (3) ayant deux ouvertures d'alimentation (31,32) destinées à être connectées, respectivement, à une tubulure d'eau froide et à une tubulure d'eau chaude, et ayant deux ouvertures de débit (33,34) destinées à être connectées, respectivement, à deux appareils de débit; - ladite seconde plate di mélange (4) ayant une ouverture di réglage (41) destinée a coopérer avec les deux ouvertures d'alimentation (31,32) de la première plate fixe (3), et ayant deux ouvertures de passage (43,44) destinées à coopérer avec les deux ouvertures de débit (33,34) de la première plate fixe (3); - ladite troisième plate di déviation (5) étant dépourvue d'ouvertures et étant destinée à fermer, alternativement, l'une ou l'autre desdites deux ouvertures de passagge (43,44) de la seconde plate di mélange (4); - un organe de transmission (6) déplaçable en rotation, solidaire de ladite seconde plate de mélange (4); - un curseur (7) guidé pour un déplacement radial dans ledit organe de transmission (6), et solidaire de ladite troisième plate di déviation (5); - et un levier de manoeuvre (8), déplaçable aussi bien en rotation qu'en oscillation, ledit levier de manoeuvre (8) étant connecté audit curseur (7) pour déplacer radialment ledit curseur (7) et ladite troisième plate di déviation (5), comme conséquence d'une oscillation du levier de manoeuvre (8), et ledit levier de manoeuvre (8) étant connecté audit organe di transmission (6) pour déplacer en rotation ledit organe de transmission (6) et ladite seconde plate de mélange (4), comme conséquence d'une rotation du levier de manoeuvre (8).

2. Un robinet mélangeur progressif suivant la revendication 1, **caractérisé en ce que** l'ensemble desdites parties composantes (3-8) est retenu dans ladite enveloppe (1) par un culot (2) appliqué à ladite enveloppe (1), ce culot (2) ayant deux raccords d'alimentation (21,22) qui communiquent avec lesdites ouvertures d'alimentation (31,32) de ladite première plate fixe (3) et qui sont destinés à être connectés, respectivement, à une tubulure d'eau froide et à une tubulure d'eau chaude, et ce culot (2) ayant deux raccords de débit (23,24) qui communiquent avec lesdites ouvertures de débit (33,34) de ladite première plate fixe (3) et qui sont destinés à être connectés, respectivement, à un premier appareil de débit (A1) et à un seconde appareil de débit (A2).

3. Un robinet mélangeur progressif suivant la revendication 1, **caractérisé en ce que** ladite première plate fixe (3) a lesdites ouvertures d'alimentation (31,32) conformées comme des segments circulaires successifs qui occupent dans leur ensemble à peu près un troisième de tour, et elle a une première ouverture de débit centrale (33) substantiellement en forme de cercle et une seconde ouverture de débit (34) conformée comme un segment circulaire qui s'étend à peu près pour un troisième de tour.

4. Un robinet mélangeur progressif suivant la revendication 1, **caractérisé en ce que** ladite seconde plate de mélange (4) a lesdites ouvertures de passage (43,44) substantiellement en forme de cercle, une ouverture (43) étant centrale et l'autre ouverture (44) étant déplacée vers la périphérie, et elle a ladite ouverture de réglage (41) en forme de segment circulaire fuselé vers une extrémité, lesdites trois ouvertures (41,43,44) étant substantiellement alignées suivant un diamètre de la seconde plate di mélange (4).
